# FASCICULE DE BREVET EUROPEEN

(11) **EP 3 984 852 B1**
(45) Date de publication et mention de la délivrance du brevet: **03.01.2024**
(21) Numéro de dépôt: 21202212.3
(22) Date de dépôt: 12.10.2021
(51) Int. Cl.: B61D 17/04, B61D 17/08, H02G 3/04

(54) **CHEMIN DE CÂBLAGE POUR VÉHICULE DE TRANSPORT, NOTAMMENT FERROVIAIRE, CAISSE DE VÉHICULE ET VÉHICULE COMPRENANT UN TEL CHEMIN DE CÂBLAGE**
KABELKANAL FÜR TRANSPORTFAHRZEUG, INSBESONDERE SCHIENENFAHRZEUG, FAHRZEUGAUFBAU UND FAHRZEUG MIT EINEM SOLCHEN KABELKANAL
CABLE RACEWAY FOR A TRANSPORT VEHICLE, IN PARTICULAR A RAILWAY VEHICLE, VEHICLE BODY AND VEHICLE COMPRISING SUCH A CABLE RACEWAY

(30) Priorité: 13.10.2020 FR 2010435
(43) Date de publication de la demande: 20.04.2022
(73) Titulaire: SpeedInnov, 75008 Paris (FR)
(72) Inventeur: LEPETIT, Michel, 17700 SAINT-PIERRE D'AMILLY (FR); PREVOST, Patrick, 17230 VILLEDOUX (FR); VICTOIRE, Rémi, 17140 LAGORD (FR)
(74) Mandataire: Lavoix

(56) Documents cités:
- EP-A1- 2 709 221
- EP-A1- 3 435 501
- GB-A- 2 551 713

## Description

La présente invention concerne un chemin de câblage pour véhicule de transport, notamment ferroviaire. Elle concerne également une caisse de véhicule et un véhicule, comprenant un tel chemin de câblage.

Dans le domaine des véhicules de transport, notamment des véhicules ferroviaires, les véhicules comprennent généralement une caisse qui définit un volume interne. Dans le cas d'un véhicule de transport de passagers, ce volume interne est un compartiment voyageur, dans lequel sont accueillis les voyageurs. Pour des raisons de sécurité et/ou de confort, des panneaux d'habillage sont généralement fixés dans le volume interne sur des rails de fixation de la paroi interne de la caisse. Divers équipements ou appareils sont prévus pour contrôler le déplacement du véhicule, assurer la sécurité du transport ou le confort des passagers dans le compartiment voyageur, etc. Pour éviter que ces appareils ne bougent pendant le transport, ces appareils sont solidaires de la caisse, tout en étant chacun connectés à un ou plusieurs câbles électriques, ces câbles assurant par exemple la commande, l'alimentation en énergie et/ou le transport d'information entre l'appareil et des unités de contrôle et/ou d'alimentation. Les divers câbles ou réseaux de câbles, qui constituent ensemble le câblage du véhicule en général, sont placés dans le véhicule de manière à rester protégés des agressions ou de l'usure, tout en étant cachés des voyageurs pour des raisons de sécurité et de confort. Une partie du câblage est ainsi logée entre la caisse et les panneaux d'habillage, cette partie du câblage étant fixée sur des supports dits « chemins de câblage », généralement montés sur les rails de fixation liés à la caisse.

Un chemin de câblage comprend une portion d'attache, qui est généralement perforée afin d'y fixer des câbles et/ou d'autres équipements, au moyen d'organes de fixation tels que des ligatures et/ou des vis. DE 10 2017 116 679-A1 décrit une telle portion d'attache. La portion d'attache est fixée à la caisse du véhicule par l'intermédiaire de pattes de fixation, qui sont traditionnellement assemblées à la portion d'attache, par exemple au moyen de rivets.

Il est connu de WO-2018/001890-A1 de réaliser un chemin de câblage en une seule pièce, par exemple au moyen d'une tôle découpée et pliée. Un tel chemin de câblage manque cependant de rigidité et ne permet pas de fixer facilement d'autres câbles ou équipements.

EP-2 709 221-A1 décrit, par exemple, un chemin de câblage avec une portion d'attache comprenant deux panneaux, qui sont chacun bordés par une paroi latérale et qui sont reliés entre eux par une base servant à la fixation de deux éléments de stabilisation. L'orientation des parois latérales n'est pas compatible avec une fixation du chemin de câblage sur une caisse de véhicule au moyen de ces parois latérales. De plus, les deux éléments de stabilisation forment, une fois assemblés à la base, un canal spécial pour le passage de câbles, ce qui empêche l'accès à la base, qui n'est donc pas adaptée à la fixation du chemin de câblage sur une caisse de véhicule.

C'est à ces problèmes qu'entend plus particulièrement remédier l'invention, en proposant un chemin de câblage plus facile d'emploi.

À cet effet, l'invention concerne un chemin de câblage selon la revendication 1.

Grâce à l'invention, les évidements laissent l'accès libre à des portions inoccupées du rail intermédiaire, ces portions inoccupées étant disponibles pour y fixer d'autres équipement du véhicule et/ou des panneaux d'habillage. Le chemin de câblage est fixé à la caisse par les pattes de fixation et par les pattes intermédiaires, ce qui augmente la rigidité et la solidité du chemin de câblage. Grâce aux deux panneaux haut et bas, chacun configuré pour recevoir des câbles et/ou d'autres équipements, le chemin de câblage présente une capacité supérieure aux chemins de câblages de l'art antérieur, tout en étant rapide à mettre en place par rapport à deux chemins de câblage indépendants. D'autre part, le chemin de câblage est réalisé d'une seule pièce, ce qui est économique.

Selon des aspects avantageux mais non obligatoires de l'invention, un tel chemin de câblage peut incorporer une ou plusieurs des caractéristiques suivantes prises selon toutes combinaisons techniquement admissibles :
- une longueur des évidements, mesurée parallèlement à l'axe de câblage, est supérieure à une longueur des pattes intermédiaires, mesurée parallèlement à l'axe de câblage, de préférence supérieure à cinq fois la longueur des pattes intermédiaires.
- Le chemin de câblage est configuré pour être fixé sur une paroi latérale de la caisse, le dispositif de fixation comprenant aussi un rail supérieur situé au-dessus du rail intermédiaire, les rails supérieur et intermédiaire étant parallèles à une direction longitudinale de la caisse, en ce que le chemin de câblage comprend des pattes d'accrochage, qui sont configurées pour coopérer avec le rail supérieur de manière à maintenir le chemin de câblage dans une configuration accrochée, dans laquelle les pattes intermédiaires sont en regard du rail intermédiaire et les pattes de fixation sont en regard du rail supérieur.
- Les pattes d'accrochage s'étendent depuis le bord externe du panneau haut, les pattes d'accrochage étant réalisées d'une seule pièce avec le panneau haut.
- Le chemin de câblage est réalisé en métal.

L'invention concerne également une caisse de véhicule de transport, comprenant un dispositif de fixation avec un rail intermédiaire, la caisse comprenant aussi un ou plusieurs chemins de câblage fixés au dispositif de fixation, dans laquelle au moins un des chemins de câblage est tel que décrit précédemment et comprend des pattes intermédiaires, qui sont fixées au rail intermédiaire.

Selon des aspects avantageux mais non obligatoires de l'invention, un tel chemin de câblage peut incorporer une ou plusieurs des caractéristiques suivantes prises selon toutes combinaisons techniquement admissibles :
- le dispositif de fixation comprend aussi un rail supérieur situé au-dessus du rail intermédiaire, les rails supérieur et intermédiaire étant fixés sur une paroi latérale de la caisse, les rails supérieur et intermédiaire étant parallèles à un axe longitudinal de la caisse, alors qu'au moins un des chemins de câblage comprend des pattes d'accrochage, qui coopèrent avec le rail supérieur de manière à maintenir le chemin de câblage dans une configuration accrochée, dans laquelle les pattes intermédiaires sont en regard du rail intermédiaire et les pattes de fixation sont en regard du rail supérieur.
- Des portions du rail supérieur sont manquantes et ménagent des passages pour les pattes d'accrochage, chaque passage étant ouvert vers le haut, de manière à accrocher le chemin de câblage au rail supérieur par un mouvement vertical de translation.
- Plusieurs chemins de câblage sont répartis régulièrement sur une portion de la caisse parallèlement à l'axe longitudinal de la caisse.

L'invention concerne enfin un véhicule de transport, notamment ferroviaire, comprenant une caisse telle que décrite précédemment.

L'invention sera mieux comprise et d'autres avantages de celle-ci apparaîtront plus clairement à la lumière de la description qui va suivre, d'un mode de réalisation d'un chemin de câblage, d'une caisse de véhicule, notamment ferroviaire, et d'un véhicule conformes à son principe, donnée uniquement à titre d'exemple et faite en référence aux dessins, dans lesquels :
- [Fig 1] la figure 1 est une vue en perspective partiellement éclatée d'un véhicule ferroviaire conforme à l'invention, qui comprend une caisse et des chemins de câblage conformes à l'invention ;
- [Fig 2] la figure 2 est une vue à plus grande échelle du cadre II sur la figure 1, représentant un chemin de câblage conforme à l'invention, certaines pièces étant cachées pour faciliter la lecture ;
- [Fig 3] la figure 3 est une vue en perspective du détail III du chemin de câblage de la figure 2, et
- [Fig 4] la figure 4 est une section, selon un plan de coupe brisé IV-IV, du chemin de câblage de la figure 2.

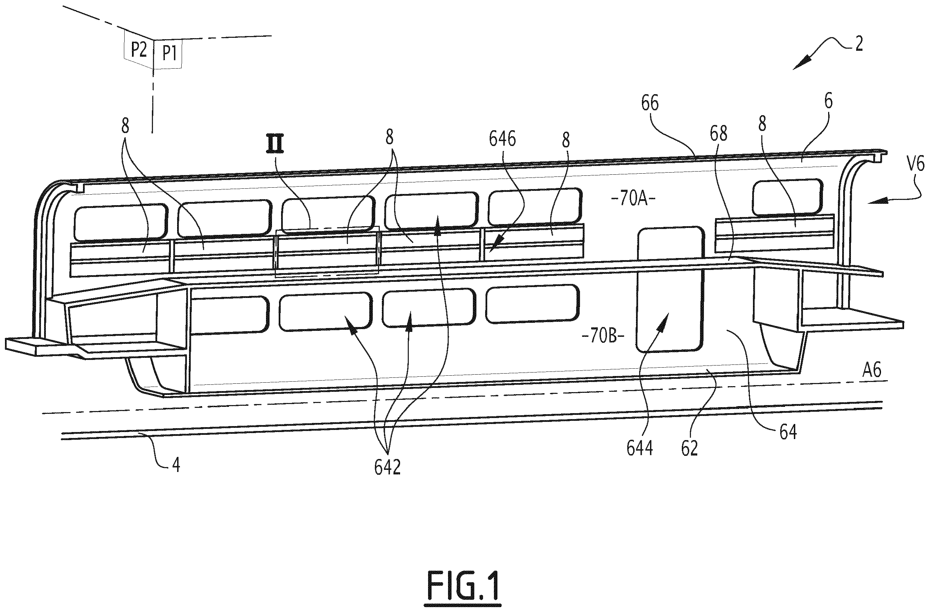

Un véhicule 2 est partiellement représenté sur la figure 1. Le véhicule 2 est ici un véhicule de transport de passagers, qui circule sur des rails d'une voie ferrée. Un seul rail 4 est représenté sur la figure 1. Le véhicule 2 est ici un véhicule ferroviaire. En variante non représentée, le véhicule 2 est un véhicule de transport routier, ou maritime, ou un aéronef.

Le rail 4 définit une direction de déplacement du véhicule 2. Le rail 4 est ici supposé être rectiligne et horizontal. Le véhicule 2 comprend une caisse 6, qui présente une forme allongée s'étendant suivant un axe longitudinal A6. L'axe longitudinal A6 est parallèle au rail 4 et est donc ici horizontal. La caisse 6 est représenté en coupe suivant un plan longitudinal P1, qui est un plan vertical et parallèle à l'axe longitudinal A6. Par commodité on définit aussi un plan transversal P2, qui est vertical et orthogonal au plan longitudinal P1.

La caisse 6 comprend un plancher 62, qui est ici horizontal, deux parois latérales 64, qui sont parallèles au plan longitudinal P1, et un toit 66. Une seule des parois latérales 64 est visible sur la figure 1. Les parois latérales 64 sont disposées en regard l'une de l'autre et relient l'un à l'autre le plancher 62 et le toit 66, délimitant ensemble un volume intérieur V6 de la caisse 6.

Dans l'exemple illustré, la caisse 6 est une caisse de véhicule ferroviaire à deux étages, qui comprend aussi un plancher intermédiaire 68, qui divise le volume intérieur V6 en un compartiment haut 70A et un compartiment bas 70B. Selon d'autres exemples, la caisse 6 ne comprend qu'un seul étage.

Des ouvertures, ménagées dans la paroi latérale 64, forment des fenêtres 642 ainsi qu'une porte 644. Dans l'exemple illustré, les fenêtres 642 et la porte 644 présentent chacune une forme rectangulaire aux coins arrondis, les fenêtres 642 étant disposées dans leur plus grande longueur parallèlement à la direction longitudinale A6 de la caisse 6.

Les fenêtres 642 des compartiments haut ou bas 70A ou 70B sont alignées les unes avec les autres suivant l'axe longitudinal A6 de la caisse 6, les fenêtres 642 du compartiment haut 70A délimitant avec le plancher intermédiaire 24 une portion inférieure 646 de la paroi latérale 64.

On comprend que dans le cas d'une caisse 6 à un étage, la caisse 6 ne comprend pas de plancher intermédiaire 68 et la paroi latérale 64 présente une portion inférieure située au voisinage du plancher 62.

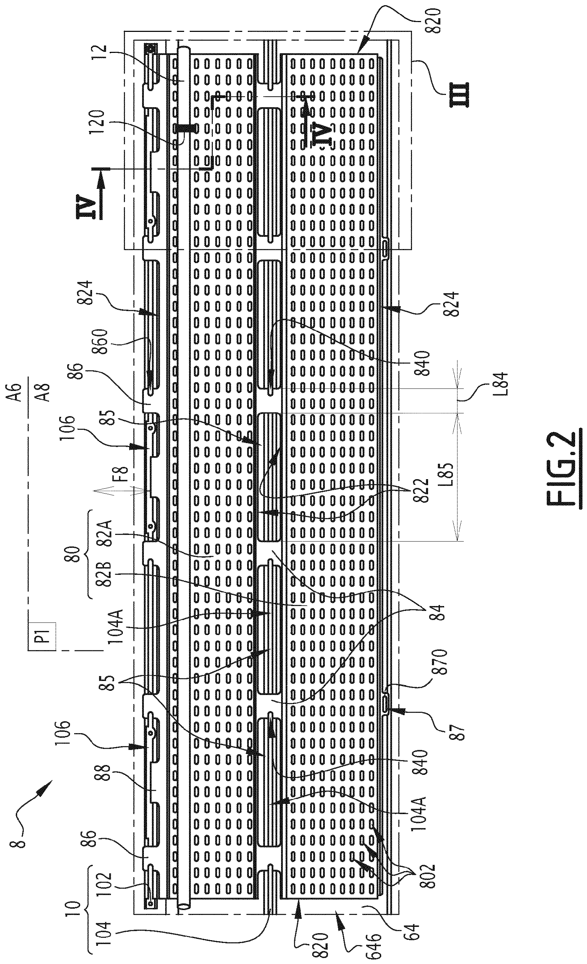

La caisse 6 comprend, en outre, des chemins de câblage 8, qui sont montés sur la paroi latérale 64 de la caisse 6, au sein du volume interne V6. Un chemin de câblage 8 est visible à plus grande échelle sur la figure 2.

Dans l'exemple illustré sur les figures, les chemins de câblage 8 sont situés dans le compartiment haut 70A de la caisse 6. Plusieurs chemins de câblage 8 sont montés sur la portion intérieure 646 de la paroi latérale 64.

Les chemins de câblage 8 de la caisse 6 présentent avantageusement une structure identique les uns aux autres et sont de préférence identiques. Dans l'exemple de la figure 1, plusieurs chemins de câblage 8, fixés à la caisse 6, sont chacun situés sous une fenêtre 642 respective. Autrement dit, plusieurs chemins de câblage 8 sont répartis régulièrement sur une portion de la caisse 6 suivant l'axe longitudinal A6, de manière à former un chemin de câblage s'étendant, parallèlement à l'axe longitudinal A6, le long de la caisse 6.

Par commodité, un seul des chemins de câblage 8 est décrit dans la suite de la description. Ce qui est décrit pour un chemin de câblage 8 est transposable aux autres chemins de câblage 8.

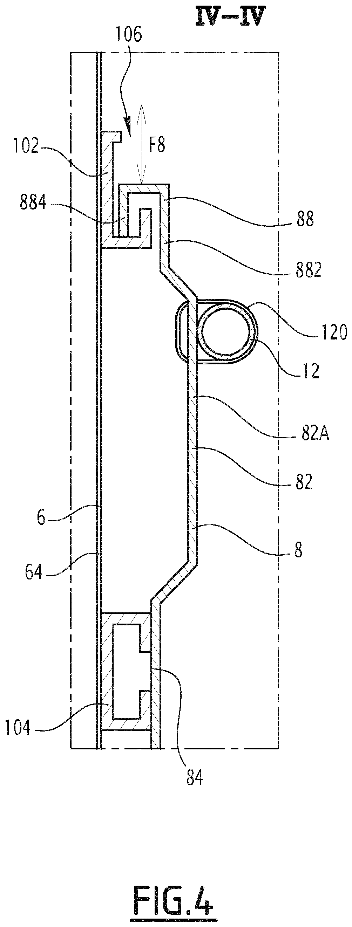

Les chemins de câblage 8 sont fixés à la caisse 6 par l'intermédiaire d'un dispositif de fixation 10, visible sur les figures 2 à 4.

Le dispositif de fixation 10 comprend ici un rail supérieur 102 et un rail intermédiaire 104.

Les rails supérieur et intermédiaire 102 et 104 sont parallèles entre eux et présentent chacun une section en forme de « C », dont une ouverture est orientée vers le volume interne V6. Dans l'exemple illustré, les rails supérieur 102 et intermédiaire 104 sont disposés parallèlement à l'axe longitudinal A6 et sont fixés à la paroi latérale 64, par exemple par soudage. Les rails 102 et 104 sont donc horizontaux lorsque la caisse 6 est horizontale. Le rail intermédiaire 104 est situé entre le rail supérieur 102 et le plancher intermédiaire 68.

Un seul chemin de câblage 8 est visible à plus grande échelle sur la figure 2, ce chemin de câblage 8 étant observé depuis le volume interne V6. Le chemin de câblage 8 comprend une portion d'attache 80, qui présente une forme de panneau allongé définissant un axe de câblage A8. L'axe de câblage A8 est ici parallèle à l'axe longitudinal A6 de la caisse 6. La portion d'attache 80 comprend des perforations 802, qui sont prévues pour attacher des câbles au moyen d'attaches, telles que des ligatures ou des colliers de serrage.

Dans l'exemple illustré, les perforations 802 sont des trous oblongs régulièrement répartis dans la portion d'attache 80. Sur les figures 2 à 4, un câble 12 est représenté attaché au moyen d'une ligature 120. Le câble 12 et la ligature 120 ne font pas partie de l'invention mais servent à en préciser le contexte. La forme des perforations 802 n'est pas limitative.

La portion d'attache 80 du chemin de câblage 8 selon l'invention comprend deux panneaux, à savoir un panneau haut 82A et un panneau bas 82B, qui sont reliés entre eux par des pattes intermédiaires 84. Les pattes intermédiaires 84 sont réalisées d'une seule pièce avec les panneaux haut 82A et bas 82B. Chaque panneau 82A, 82B présente une forme allongée et s'étend dans sa longueur parallèlement à l'axe longitudinal A6. Le panneau haut 82A est situé au-dessus du panneau bas 82B. Chaque panneau 82A, 82B présente ici une forme de rectangle dont les petits côtés forment deux extrémités 820 opposées, qui sont ici verticales, et dont les deux grands côtés sont ici disposés parallèlement à l'axe longitudinal A6. Les grands côtés des deux panneaux 82A et 82B, situés en regard l'un de l'autre définissent des rebords internes 822 des panneaux 82A et 82B, et l'on définit des rebords externes 824 comme étant les rebords opposés aux rebords internes 822.

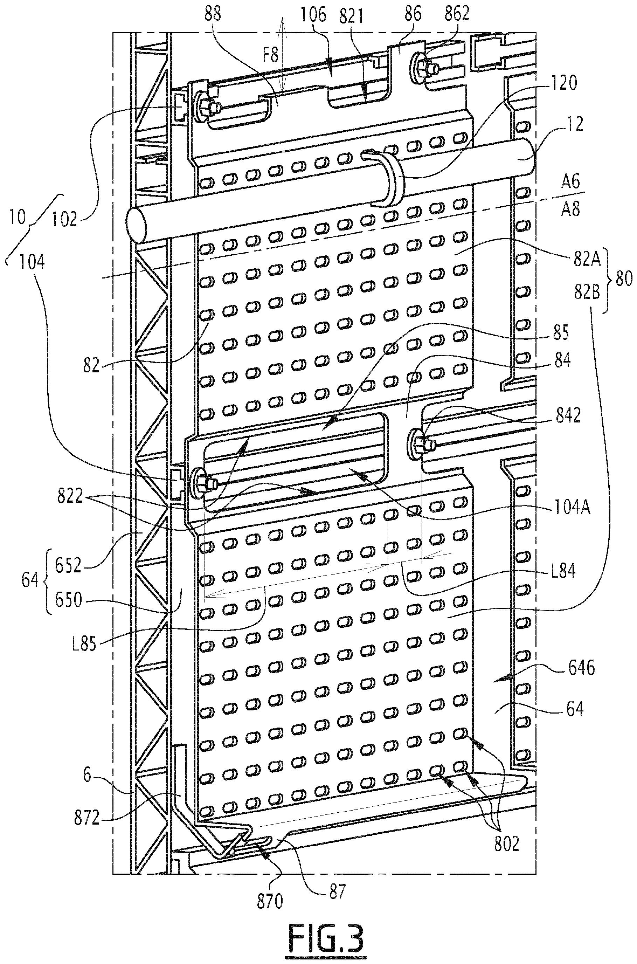

Les pattes intermédiaires 84 présentent ici chacune une forme rectangulaire et relient l'un à l'autre les rebords internes 822 des deux panneaux 82A et 82B. Chacune des pattes intermédiaires 84 présente une encoche 840, qui est ici ouverte suivant une direction parallèle à l'axe longitudinal A6. Les encoches 840 sont prévues pour coopérer avec des organes de fixation 842, visibles sur la figure 3, qui sont ici des boulons, comprenant chacun une vis et un écrou, et qui coopèrent avec le rail intermédiaire 104, de manière à fixer les pattes intermédiaires 84 au rail intermédiaire 104. Par exemple, l'écrou est inséré dans le rail 104 intermédiaire en forme de C, et la vis, coopérant avec l'encoche 840 d'une patte intermédiaire 84, est insérée dans l'écrou pour solidariser cette patte intermédiaire 840 à la paroi latérale 64.

Les pattes intermédiaires 84 d'un chemin de câblage 8 sont séparées entre elles par des évidements 85, qui présentent ici chacun une forme rectangulaire allongée et disposée dans sa plus grande longueur parallèlement à l'axe de câblage A8. Chaque évidemment 85 présente une longueur L85, mesurée parallèlement à l'axe de câblage A8.

De façon analogue, deux évidements 85 consécutifs définissent entre eux une longueur longitudinale L84, mesurée parallèlement à l'axe de câblage A8. Autrement dit, la longueur longitudinale L84 représente une longueur longitudinale des pattes 84.

Sur la figure 2, certaines portions du rail intermédiaire 104 sont cachées par les pattes intermédiaires 84, tandis que d'autres portions du rail intermédiaire 104 sont visibles. Ces portions visibles, référencées 104A, sont donc accessibles depuis le volume interne V6. Les évidements 85 sont donc le plus grand possible par rapport aux pattes intermédiaires 84, de façon à rendre accessible, depuis le volume interne V6, une plus grande portion du rail intermédiaire 104. À l'inverse, on comprend que si les pattes intermédiaires 84 sont trop petites, autrement dit si la longueur L84 des pattes 84 est trop réduite par rapport à la longueur L85 des évidements 85, la structure du chemin de câblage 8 serait trop fragile, ce qui n'est pas souhaitable. En pratique, la longueur L85 des évidements 85 est supérieure ou égale à la longueur L84 des pattes intermédiaires 84, et est inférieure ou égale à vingt fois la longueur L84 des pattes intermédiaires 84. De préférence, la longueur L85 des évidements 85 est supérieure à cinq fois la longueur L84 des pattes intermédiaires 84.

Le rebord externe 824 du panneau haut 82A comprend des pattes de fixation, dites pattes supérieures 86. Les pattes supérieures 86 s'étendent du bord externe 824 du panneau haut 82A parallèlement au panneau haut 82A. Chaque patte supérieure 86 présente ici une encoche 860 prévues pour coopérer avec des organes de fixation 862 pour fixer le chemin de câblage 8 au rail supérieur 102, les découpes 860 étant visibles sur la figure 2, tandis que les organes de fixation 862, qui sont ici des boulons, sont visibles sur la figure 3. Les organes de fixation 862 sont analogues, de préférence identiques, aux organes de fixation 842.

Le rebord externe 824 du panneau bas 82B comprend aussi des pattes de fixation, dites pattes inférieures 87. Les pattes inférieures 87 s'étendent du bord externe 824 du panneau bas 82B parallèlement au panneau bas 82B. Chaque patte inférieure 87 présente ici un trou oblong 870, configurée pour recevoir un organe de fixation à une bride 872 du dispositif de fixation 10. Les organes de fixation des pattes inférieures 87 ne sont pas représentés.

En variante non représentée, les pattes inférieures 87 présentent une forme similaire aux pattes supérieures 86, et le dispositif de fixation 10 comprend un rail inférieur, analogue au rail supérieur 102, pour la fixation des pattes inférieures 87 au moyen d'organes de fixation analogues aux organes de fixation 862 des pattes supérieures 86 au rail supérieur 102.

Plus généralement, les pattes supérieures 86 et inférieures 87 sont des pattes de fixation, qui s'étendent d'un bord externe 824 respectif de la portion d'attache 80 et qui sont destinées à être fixées au dispositif de fixation 10, de manière à maintenir la portion d'attache 80 immobile dans le volume interne V6 de la caisse 6. Les pattes supérieures 86 et inférieures 87 sont réalisées d'une seule pièce avec la portion d'attache 80. Ainsi le chemin de câblage 8 est entièrement réalisé d'une seule pièce, par découpage et/ou emboutissage et/ou pliage d'une tôle métallique, ce qui est particulièrement économique.

Les pattes de fixation intermédiaires 84 sont communes aux deux panneaux haut et bas 82A et 82B. Le chemin de câblage 80, qui comprend les deux parties que sont les panneaux haut 82A et bas 82B, est ainsi plus rapide à fixer à la caisse 6 par rapport à deux chemins de câblage de l'art antérieur ne comprenant chacun qu'un seul panneau du type des panneaux haut ou bas 82A ou 82B. Le montage du chemin de câblage 8 est ainsi économique. Les évidements 85 autorisent l'accès au rail intermédiaire 104 ; il est ainsi possible de fixer à la caisse 6 d'autres équipements du véhicule 2, par exemple des éléments d'habillage de la paroi latérale 64. Le chemin de câblage 8 est ainsi particulièrement pratique à utiliser.

Le rebord externe 824 du panneau haut 82A comprend aussi des pattes d'accrochage 88, qui coopèrent avec le rail supérieur 102 de manière à soutenir le poids du chemin de câblage 8 tant que les organes de fixation 842 et 862 ne sont pas mis en place. Dans l'exemple illustré, chaque patte d'accrochage 88 est située entre deux pattes externes 86 consécutives d'un même chemin de câblage 8. Chaque patte d'accrochage 88 est reliée par une première extrémité 882 au rebord externe 824, tandis qu'une autre extrémité, opposée à la première extrémité 882 et dite extrémité libre 884, et recourbée vers la paroi latérale 64 sur laquelle le chemin de câblage 8 est monté de manière à former un crochet, qui coopère avec le rail supérieur 102 en forme de C.

Lors du montage du chemin de câblage 8 sur la paroi latérale 64 de la caisse 6, dans un premier temps l'opérateur suspend le chemin de câblage 8 au rail supérieur 102 au moyen des pattes d'accrochage 88. À cet effet, des portions du profil en « C » du rail supérieur 102 sont manquantes au niveau de chaque patte d'accrochage 88, de manière à ménager des passages 106 pour les pattes d'accrochage 88. Chaque passage 106 est ouvert vers le haut, de manière à accrocher le chemin de câblage 8 au rail supérieur 102 par un mouvement vertical de translation, représenté par une double flèche F8. Les passages 106 sont usinés dans le rail supérieur 102 lors de leur fabrication, par exemple par fraisage.

Le chemin de câblage 8 est alors dans une configuration accrochée, représentée sur les figures 1 à 4, dans laquelle le chemin de câblage 8 est monté sur la paroi latérale 64, les pattes intermédiaires 84 étant maintenues en regard du rail intermédiaire 104 et les pattes externes 86 étant maintenues en regard du rail supérieur 102. L'opérateur peut alors ajuster la position du chemin de câblage 8 le long du rail supérieur 102, avant de fixer le chemin de câblage 8 à la caisse 6 au moyen des organes de fixation 842 et 862.

Dans un deuxième temps, l'opérateur met en place des organes de fixation 842 et 862 sans avoir à soutenir le chemin de câblage 8, ce qui réduit la pénibilité du travail de l'opérateur.

Dans l'exemple illustré, les passages 106 sont représentés verticalement alignés avec les pattes d'accrochage 88, et le chemin de câblage 8 peut être décroché du rail supérieur 102 par un mouvement de translation suivant la flèche F8. Si l'opérateur déplace le chemin de câblage 8 le long du rail supérieur 102 parallèlement à l'axe de câblage A8 jusqu'à ce que les pattes d'accrochage 88 ne soient plus alignées avec les passages 106, le chemin de câblage 8 ne peut plus être décroché du rail supérieur 102, même si les organes de fixation 842 et 862 ne sont pas encore mis en place. Le montage du chemin de câblage 8 à la caisse 6 est ainsi particulièrement pratique et limite les risques d'accident.

Le chemin de câblage 8 est réalisé en métal. Le chemin de câblage 8 est produit notamment par emboutissage et par pliage, ces modes de production n'étant pas limitatifs. Les pattes externes 86 de fixation au rail supérieur 102 et la portion d'attache 80 sont réalisées d'une seule pièce.

Lors de la production du chemin de câblage 8, les évidements 85, les pattes intermédiaires 84 sont ménagés dans la portion d'attache 80. Les pattes d'accrochage 88 aussi sont réalisées d'une seule pièce avec le reste du chemin de câblage 8, ce qui est économique.

On comprend que plusieurs câbles peuvent être fixés à chacun des deux panneaux haut et bas 82A et 82B du chemin de câblage 8, alors que la mise en place du chemin de câblage 8 demande bien moins d'opérations de mise en place des organes de fixation 842 et 862 par rapport à une situation où les panneaux feraient chacun partie d'un chemin de câblage indépendant de l'autre chemin de câblage.

La paroi latérale 64, dont la structure est visible sur la figure 3, est ici une paroi dite « à double peau », comprenant une paroi interne 650, orientée du côté du volume interne V6, et une paroi externe 652 orientée à l'opposé de la paroi interne 650. La paroi latérale 64 est formée de profilés métalliques, qui sont disposés parallèlement à l'axe longitudinal A6 et qui sont assemblés les uns aux autres, par exemple par soudage.

Dans l'exemple illustré, le dispositif de fixation 10 comprend des rails supérieur 102 et intermédiaire 104, auxquels sont fixées les pattes supérieure 86 et intermédiaire 84.

En variante non représentée, le dispositif de fixation 10 comprend aussi un rail inférieur, analogue au rail intermédiaire 104 et disposé, parallèlement à l'axe longitudinal A6, du côté opposé du rail supérieur 102 par rapport au rail intermédiaire 104, tandis que le chemin de câblage 8 comprend des pattes inférieures, qui s'étendent du bord externe 824 du panneau bas 82A et qui sont fixées au rail inférieur par des organes de fixation analogues aux organes 842 ou 862.

Le mode de réalisation et les variantes mentionnés ci-dessus peuvent être combinés entre eux pour générer de nouveaux de modes de réalisation de l'invention sans sortir du cadre des revendications ci-jointes.

## Revendications

1. Chemin de câblage (8) pour un véhicule (2) de transport, notamment ferroviaire, le chemin de câblage (8) comprenant une portion d'attache (80) et des pattes de fixation (86, 87) solidaires de la portion d'attache (80), dans lequel :
- la portion d'attache (80) présente une forme allongée définissant un axe de câblage (A8) et comprend deux bords externes (824) opposés et parallèles à l'axe de câblage (A8),
- les pattes de fixation (86, 87) sont destinées à être fixées à un dispositif de fixation (10) d'une caisse (6) du véhicule (2), de manière à maintenir la portion d'attache (80) immobile dans un volume interne (V6) de la caisse, et
- les pattes de fixation (86, 87) et la portion d'attache (80) sont réalisées d'une seule pièce, les pattes de fixation s'étendant depuis un bord externe (824) respectif de la portion d'attache (80),
- la portion d'attache (80) comprenant un panneau haut (82A) et un panneau bas (82B), présentant chacun un rebord interne (822) parallèle à l'axe de câblage (A8), les deux rebords internes étant situés en regard l'un de l'autre,
**caractérisé**
- **en ce que** les rebords internes des panneaux haut et bas sont reliés l'un à l'autre par des pattes intermédiaires (84) de fixation, qui sont séparées par des évidements (85) et qui sont configurées pour être fixées à un rail intermédiaire (104) du dispositif de fixation (10), les évidements étant configurés pour libérer l'accès, depuis le volume interne (V6), à des portions (104A) du rail intermédiaire (104) situées entre les pattes intermédiaires (84), et
- **en ce que** les pattes intermédiaires sont réalisées d'une seule pièce avec les panneaux haut et bas.

2. Chemin de câblage (8) selon la revendication précédente, **caractérisé en ce qu'**une longueur (L85) des évidements (85), mesurée parallèlement à l'axe de câblage (A8), est supérieure à une longueur (L84) des pattes intermédiaires (84), mesurée parallèlement à l'axe de câblage (A8), de préférence supérieure à cinq fois la longueur des pattes intermédiaires.

3. Chemin de câblage (8) selon l'une quelconque des revendications précédentes, **caractérisé en ce qu'**il est configuré pour être fixé sur une paroi latérale (64) de la caisse (6), le dispositif de fixation (10) comprenant aussi un rail supérieur (102) situé au-dessus du rail intermédiaire (104), les rails supérieur et intermédiaire étant parallèles à une direction longitudinale (A6) de la caisse (6), **en ce que** le chemin de câblage (8) comprend des pattes d'accrochage (88), qui sont configurées pour coopérer avec le rail supérieur de manière à maintenir le chemin de câblage (8) dans une configuration accrochée, dans laquelle les pattes intermédiaires (84) sont en regard du rail intermédiaire et les pattes de fixation (86) sont en regard du rail supérieur.

4. Chemin de câblage (8) selon la revendication précédente, **caractérisé en ce que** les pattes d'accrochage (88) s'étendent depuis le bord externe (824) du panneau haut (82A), les pattes d'accrochage étant réalisées d'une seule pièce avec le panneau haut.

5. Chemin de câblage (8) selon l'une quelconque des revendications précédentes, le chemin de câblage (8) étant réalisé en métal.

6. Caisse (6) de véhicule (2) de transport, comprenant un dispositif de fixation (10) avec un rail intermédiaire (104), la caisse comprenant aussi un ou plusieurs chemins de câblage (8) fixé au dispositif de fixation, **caractérisée en ce qu'**au moins un des chemins de câblage est selon l'une quelconque des revendications précédentes et comprend des pattes intermédiaires (84), qui sont fixées au rail intermédiaire (104).

7. Caisse (6) selon la revendication précédente, **caractérisée en ce que** le dispositif de fixation (10) comprend aussi un rail supérieur (102) situé au-dessus du rail intermédiaire (104), les rails supérieur (102) et intermédiaire (104) étant fixés sur une paroi latérale (64) de la caisse, les rails supérieur et intermédiaire étant parallèles à un axe longitudinal (A6) de la caisse, et **en ce qu'**au moins un des chemins de câblage (8) comprend des pattes d'accrochage (88), qui coopèrent avec le rail supérieur de manière à maintenir le chemin de câblage (8) dans une configuration accrochée, dans laquelle les pattes intermédiaires (84) sont en regard du rail intermédiaire et les pattes de fixation (86) sont en regard du rail supérieur.

8. Caisse (6) selon la revendication précédente, **caractérisée en ce que** des portions du rail supérieur (102) sont manquantes et ménagent des passages (106) pour les pattes d'accrochage (88), chaque passage étant ouvert vers le haut, de manière à accrocher le chemin de câblage (8) au rail supérieur (102) par un mouvement vertical de translation (F8).

9. Caisse (6) selon l'une quelconque des revendications 6 à 8, **caractérisé en ce que** plusieurs chemins de câblage (8) sont répartis régulièrement sur une portion de la caisse parallèlement à l'axe longitudinal (A6) de la caisse.

10. Véhicule (2) de transport, notamment ferroviaire, **caractérisé en ce que** le véhicule (2) comprend une caisse (6) selon l'une quelconque des revendications 6 à 9.

## Patentansprüche

1. Kabelkanal (8) für ein Transportfahrzeug (2), insbesondere ein Schienenfahrzeug, wobei der Kabelkanal (8) einen Befestigungsabschnitt (80) und Befestigungslaschen (86, 87) umfasst, die mit dem Befestigungsabschnitt (80) fest verbunden sind, wobei:
- der Befestigungsabschnitt (80) eine längliche Form aufweist, die eine Verkabelungsachse (A8) definiert, und zwei Außenkanten (824) umfasst, die einander gegenüberliegen und parallel zur Verkabelungsachse (A8) verlaufen,
- die Befestigungslaschen (86, 87) dazu bestimmt sind, an einer Befestigungsvorrichtung (10) eines Wagenkastens (6) des Fahrzeugs (2) derart befestigt zu sein, dass der Befestigungsabschnitt (80) in einem Innenvolumen (V6) des Wagenkastens unbeweglich gehalten wird, und
- die Befestigungslaschen (86, 87) und der Befestigungsabschnitt (80) einteilig hergestellt sind, wobei sich die Befestigungslaschen ab einer jeweiligen Außenkante (824) des Befestigungsabschnitts (80) erstrecken,
- der Befestigungsabschnitt (80) eine obere Platte (82A) und eine untere Platte (82B) umfasst, die jeweils einen inneren Rand (822) parallel zur Verkabelungsachse (A8) aufweisen, wobei die beiden inneren Ränder einander zugewandt sind,
**dadurch gekennzeichnet,**
- **dass** die inneren Ränder der oberen und unteren Platte durch Zwischenbefestigungslaschen (84) miteinander verbunden sind, die durch Aussparungen (85) getrennt sind und die ausgelegt sind, um an einer Zwischenschiene (104) der Befestigungsvorrichtung (10) befestigt zu sein, wobei die Aussparungen derart ausgelegt sind, den Zugang ab dem Innenvolumen (V6) zu Abschnitten (104A) der Zwischenschiene (104) freizugeben, die sich zwischen den Zwischenlaschen (84) befinden, und
- **dass** die Zwischenlaschen einteilig mit der oberen und unteren Platte hergestellt sind.

2. Kabelkanal (8) nach vorhergehendem Anspruch, **dadurch gekennzeichnet, dass** eine Länge (L85) der Aussparungen (85), gemessen parallel zur Verkabelungsachse (A8), größer als eine Länge (L84) der Zwischenlaschen (84), gemessen parallel zur Verkabelungsachse (A8), vorzugsweise größer als das Fünffache der Länge der Zwischenlaschen, ist.

3. Kabelkanal (8) nach einem der vorhergehenden Ansprüche, **dadurch gekennzeichnet, dass** er derart ausgelegt ist, um an einer Seitenwand (64) des Wagenkastens (6) befestigt zu sein, wobei die Befestigungsvorrichtung (10) ebenfalls eine obere Schiene (102) umfasst, die sich oberhalb der Zwischenschiene (104) befindet, wobei die obere und die Zwischenschiene parallel zu einer Längsrichtung (A6) des Wagenkastens (6) sind, dass der Kabelkanal (8) Einhängelaschen (88) umfasst, die derart ausgelegt sind, dass sie mit der oberen Schiene derart zusammenwirken, dass der Kabelkanal (8) in einer eingehängten Konfiguration gehalten wird, in der die Zwischenlaschen (84) der Zwischenschiene zugewandt sind und die Befestigungslaschen (86) der oberen Schiene zugewandt sind.

4. Kabelkanal (8) nach vorhergehendem Anspruch, **dadurch gekennzeichnet, dass** sich die Einhängelaschen (88) ab der Außenkante (824) der oberen Platte (82A) erstrecken, wobei die Einhängelaschen einteilig mit der oberen Platte hergestellt sind.

5. Kabelkanal (8) nach einem der vorherigen Ansprüche, wobei der Kabelkanal (8) aus Metall hergestellt ist.

6. Wagenkasten (6) eines Transportfahrzeugs (2), umfassend eine Befestigungsvorrichtung (10) mit einer Zwischenschiene (104), wobei der Wagenkasten ebenfalls einen oder mehrere Kabelkanäle (8) umfasst, der an der Befestigungsvorrichtung befestigt ist, **dadurch gekennzeichnet, dass** mindestens einer der Kabelkanäle nach einem der vorhergehenden Ansprüche ist und Zwischenlaschen (84) umfasst, die an der Zwischenschiene (104) befestigt sind.

7. Wagenkasten (6) nach vorhergehendem Anspruch, **dadurch gekennzeichnet, dass** die Befestigungsvorrichtung (10) ebenfalls eine obere Schiene (102) umfasst, die sich oberhalb der Zwischenschiene (104) befindet, wobei die obere Schiene (102) und die Zwischenschiene (104) an einer Seitenwand (64) des Wagenkastens befestigt sind, wobei die obere und die Zwischenschiene parallel zu einer Längsachse (A6) des Wagenkastens sind und dass mindestens einer der Kabelkanäle (8) Einhängelaschen (88) umfasst, die mit der oberen Schiene derart zusammenwirken, dass der Kabelkanal (8) in einer eingehängten Konfiguration gehalten wird, in der die Zwischenlaschen (84) der Zwischenschiene zugewandt sind und die Befestigungslaschen (86) der oberen Schiene zugewandt sind.

8. Wagenkasten (6) nach vorhergehendem Anspruch, **dadurch gekennzeichnet, dass** Abschnitte der oberen Schiene (102) fehlen und Durchgänge (106) für die Einhängelaschen (88) bilden, wobei jeder Durchgang nach oben offen ist, so dass der Kabelkanal (8) an der oberen Schiene (102) durch eine vertikale Translationsbewegung (F8) eingehängt wird.

9. Wagenkasten (6) nach einem der Ansprüche 6 bis 8, **dadurch gekennzeichnet, dass** mehrere Kabelkanäle (8) gleichmäßig über einen Abschnitt des Wagenkastens parallel zur Längsachse (A6) des Wagenkastens verteilt sind.

10. Transportfahrzeug (2), insbesondere Schienenfahrzeug, **dadurch gekennzeichnet, dass** das Fahrzeug (2) einen Wagenkasten (6) nach einem der Ansprüche 6 bis 9 umfasst.

## Claims

1. A cable tray (8) for a transport vehicle (2), in particular a rail vehicle, the cable tray (8) comprising an attachment portion (80) and fixing lugs (86, 87) secured to the attachment portion (80), in which:
- the attachment portion (80) has an elongated shape defining a cabling axis (A8) and comprises two outer edges (824) opposite and parallel to the cabling axis (A8),
- the fixing lugs (86, 87) are intended to be attached to a fixing device (10) of a body (6) of the vehicle (2), so as to keep the attachment portion (80) immobile in an internal volume (V6) of the body, and
- the fixing lugs (86, 87) and the attachment portion (80) are made in one piece, the fixing lugs extending from a respective outer edge (824) of the attachment portion (80),
- the attachment portion (80) comprising a top panel (82A) and a bottom panel (82B), each having an internal flange (822) parallel to the wiring axis (A8), the two internal flanges facing each other,
**characterised**
- **in that** the inner edges of the top and bottom panels are connected to each other by intermediate fixing lugs (84), which are separated by recesses (85) and which are configured to be fixed to an intermediate rail (104) of the fixing device (10), the recesses being configured to free access, from the internal volume (V6), to portions (104A) of the intermediate rail (104) I located between the intermediate fixing lugs (84), and
- **in that** the intermediate fixing lugs are made in one piece with the top and bottom panels.

2. A cable tray (8) according to the preceding claim, **characterised in that** a length (L85) of the recesses (85), measured parallel to the wiring axis (A8), is greater than a length (L84) of the intermediate fixing lugs (84), measured parallel to the wiring axis (A8), preferably greater than five times the length of the intermediate fixing lugs..

3. A cable tray (8) according to any one of the preceding claims, **characterised in that** it is configured to be fixed to a side wall (64) of the body (6), the fixing device (10) also comprising an upper rail (102) located above the intermediate rail (104), the upper and intermediate rails being parallel to a longitudinal direction (A6) of the body (6), **in that** the cable tray (8) comprises hooking lugs (88), which are configured to cooperate with the top rail so as to hold the cable tray (8) in a hooked configuration, in which the intermediate lugs (84) face the intermediate rail and the fixing lugs (86) face the upper rail.

4. A cable tray (8) according to the preceding claim, **characterised in that** the hooking lugs (88) extend from the outer edge (824) of the top panel (82A), the hooking lugs being made in a single piece with the top panel.

5. A cable tray (8) according to any one of the preceding claims, the cable tray (8) being made of metal.

6. A body (6) for a transport vehicle (2), comprising a fixing device (10) with an intermediate rail (104), the body also comprising one or more cable trays (8) attached to the fixing device, **characterised in that** at least one of the cable trays is according to any one of the preceding claims and comprises intermediate lugs (84), which are fixed to the intermediate rail (104).

7. A body (6) according to the preceding claim, **characterised in that** the fixing device (10) also comprises an upper rail (102) situated above the intermediate rail, the upper (102) and intermediate (104) rails being fixed to a side wall (64) of the body, the upper and intermediate rails being parallel to a longitudinal axis (A6) of the body, and **in that** at least one of the cable trays (8) comprises hooking lugs (88), which cooperate with the upper rail so as to hold the cable tray (8) in a hooked configuration, in which the intermediate lugs (84) face the intermediate rail and the fixing lugs (86) face the upper rail.

8. A body (6) according to the preceding claim, **characterised in that** portions of the upper rail (102) are missing and provide passages (106) for the hooking lugs (88), each passage being open upwards, so as to hook the cable tray to the upper rail (102) by a vertical translational movement (F8).

9. A body (6) according to any one of claims 6 to 8, **characterised in that** several cable trays (8) are regularly distributed over a portion of the body parallel to the longitudinal axis (A6) of the body.

10. A transport vehicle (2), in particular a rail vehicle, **characterised in that** the vehicle (2) comprises a body (6) according to any one of claims 6 to 9.
